# EUROPÄISCHE PATENTANMELDUNG

(11) **EP 0 903 081 A1**
(43) Veröffentlichungstag der Anmeldung: **24.03.1999**
(21) Anmeldenummer: 98890267.2
(22) Anmeldetag: 17.09.1998
(51) Int. Cl.: A01N 65/00

(54) **Mittel zum Schutz von Pflanzen gegen Schädlinge**

(30) Priorität: 17.09.1997 AT 1568/97
(71) Anmelder: Göldner, Peter, Dipl.-Ing., 6300 Wörgl (AT)
(72) Erfinder: Göldner, Peter DI., 6300 Wörgl (AT); Granitzer, Wolfgang, 9020 Klagenfurt (AT)

(57) **Zusammenfassung**

Die vorliegende Erfindung betrifft ein Mittel zum Schutz von Pflanzen gegen Schädlinge, insbesondere Rüsselkäfer, welches Mittel ein Harz, beispielsweise einen Balsam stammend von Koniferen, ein Lösungsmittel und ein Trägermaterial, insbesondere ein festes, anorganisches Trägermaterial, enthält. Das Mittel weist insbesondere den Vorzug auf, daß es leicht auf die zu schützende Pflanze aufgebracht werden kann und sehr selektiv, unter Erhalt von Nützlingen, auf den entsprechenden Schädling wirkt.

## Beschreibung

Die vorliegende Erfindung betrifft ein Mittel zum Schutz von Pflanzen gegen Schädlinge, insbesondere Rüsselkäfer, enthaltend ein Harz, ein Lösungsmittel und ein Trägermaterial.

Maßnahmen, die der vorbeugenden oder unmittelbaren Abwehr von Schädlingen und des von ihnen zu erwartenden Schadens an Menschen, Tieren, Pflanzen und Sachen (z.B. Werkstoffen wie Holz) dienen, subsummiert unter dem Begriff Schädlingsbekämpfung, sind bereits seit langem bekannt und bedienen sich im wesentlichen biologischer, physikalisch-technischer und/oder chemischer Mittel. Die verschiedenen Mittel werden i.a. nach der Art der zu bekämpfenden Schädlinge bzw. deren Entwicklungsformen unterschieden, z.B. werden Mittel, insbesondere chemische Mittel, die gegen Insekten gerichtet sind, als Insektizide bezeichnet.

Bei der biologischen Schädlingsbekämpfung werden die Schädlinge v.a. durch den Einsatz von natürlichen Feinden und von tierartspezifischen Mikroorganismen wie Parasiten, Bakterien oder Viren vernichtet, aber auch von Kulturmaßnahmen, die die Lebensbedingungen der Schädlinge beeinträchtigen. Letztere Maßnahmen schließen gentechnologische oder biotechnologische Maßnahmen ein, beispielsweise die Züchtung resistenter Sorten.

Sehr verbreitet sind auch physikalisch-technische Maßnahmen zur Schädlingsbekämpfung, wie das Aufstellen von Fallen, das Anbringen von Raupenleim, Desinfektion oder das Abtöten von Schädlingen durch Anwendung von Hitze (Pasteurisierung), Druck, Blitzlicht, Strahlung (Sterilisation), Flammen oder Elektrizität.

In den letzten Jahrzehnten immer mehr an Bedeutung gewonnen haben chemische Methoden zur Schädlingsbekämpfung. Derartige Mittel umfassen Chemikalien, die zur Abtötung, Inaktivierung oder Vertreibung von Schädlingen geeignet sind. Insbesondere sind darunter Pflanzenschutzmittel zu verstehen, die als Sprays, Spritzmittel, Stäubemittel, Streumittel etc. eingesetzt werden können.
Zu dieser Gruppe von Methoden zählen auch Hemmstoffe oder Pflanzenwuchsstoffe, der Einsatz von Insektenhormonen und - lockstoffen (Pheromonen) und von Phytoalexinen, also Stoffe, derer sich die Pflanzen selbst zur Schädlingsbekämpfung bedienen.

Häufige Nachteile bei den verschiedenen aus dem Stand der Technik bekannten Maßnahmen zur Schädlingsbekämpfung sind das Auftreten von Resistenzen gegen einzelne Mittel oder Rückstands-Probleme, Probleme der Verschleppung in die natürlichen Nahrungsketten inkludiert.

Deshalb wird heutzutage immer mehr der sogenannten integrierten Schädlingsbekämpfung, d.h. einer alle Verfahren optimal einbeziehenden Schädlingsbekämpfung, der Vorzug gegeben.

Der Große Braune Rüsselkäfer (Hylobius abietis) beispielsweise, der wie der Borkenkäfer zur Überfamilie der *Curculionoidea* zählt, ist als Schädling in Fichten- und Kiefernkulturen bekannt. Diese Käferart wird etwa 3-6 Jahre alt und vermag sich während der gesamten Zeit fortzupflanzen. Die Larven stellen in den flach liegenden Wurzeln abgestorbener oder gefällter Fichten und Kiefern oberflächliche Fraßgänge her. Auch die Verpuppung erfolgt in der Wurzel. Der Larvenfraß ist wirtschaftlich ohne Bedeutung, die Käfer jedoch müssen bekämpft werden. Sie befressen nicht nur das Kambium und die Rinde. Bei Massenauftreten befallen sie zunehmend Jungfichten und - kiefern. Sie können ganze Schonungen kahlfressen, so daß die Bäumchen absterben. Die lange Lebensdauer dieser Käfer machen die Generationsfolge unübersichlich, jedoch sind zwei Hauptfraßzeiten feststellbar, nämlich Mai und August.
Zur Bekämpfung werden im Stand der Technik beispielsweise Insektizide vorgeschlagen, insbesondere solche auf Basis von Pyrethroiden, welche als Kontakt- und Fraßmittel eingesetzt werden.

Aus *Nordlander G., Scand J.For.Res.2,* 199-213, *1987, "A method for trapping Hylobius abietis with a standardized bait and its potential for forecasting seedling damage"* ist beispielsweise ein Verfahren zum Fangen des Hylobius abietis bekannt. Die in diesem Dokument beschriebene Falle wird u.a. mit einer Mischung aus α-Pinen und Ethanol gefüllt. Der Hylobius abietis wird insbesondere durch Freisetzung entsprechender flüchtiger Verbindungen angezogen und in weiterer Folge in der Falle getötet. Als ein Nachteil einer derartigen Falle ist insbesondere die schwere Standardisierbarkeit der in der Falle enthaltenen Mischung, insbesondere der davon abgegebenen flüchtigen Bestandteile, zu erwähnen. Ein weiterer Nachteil liegt darin, daß mittels dieser Fallenmethode neben der gewünschten Vernichtung der Schädlinge auch Nützlinge getötet werden.

Aufgabe der vorliegenden Erfindung ist es, ein verbessertes Mittel zum Schutz von Pflanzen gegen Schädlinge bzw. zur Schädlingsbekämpfung zur Verfügung zu stellen, welches bekannte Nachteile vermeidet, einfach anzuwenden, eine lange Wirkungsdauer aufweist und kostengünstig ist.
Insbesondere soll ein solches Mittel zur Verfügung gestellt werden, welches eine hohe Selektivität für den jeweiligen Schädling aufweist, und dadurch dazu beiträgt, Nützlinge zu erhalten. Es soll also ein biologisch und ökonomisch ausgewogenes Mittel zur Verfügung gestellt werden.
Eine weitere Aufgabe der vorliegenden Erfindung ist es, ein leicht standardisierbares Mittel bereitzustellen.

Die Aufgabe wird gemäß den Ansprüchen der vorliegenden Patentanmeldung gelöst.
Das erfindungsgemäße Mittel zum Schutz von Pflanzen gegen Schädlinge, insbesondere Rüsselkäfer, ist dadurch gekennzeichnet, daß es ein Harz, ein Lösungsmittel für das Harz und ein Trägermaterial enthält.
Unter Schutz ist erfindungsgemäß insbesondere das Verhindern eines Befalls der Pflanze durch den Schädling zu verstehen, in einem weiteren Sinne aber auch eine Art der Bekämpfung des Schädlings.
Das erfindungsgemäße Mittel bietet insgesamt den Vorteil, daß es lediglich auf den Stamm der betroffenen Pflanze aufgebracht werden muß. Seine Wirkungsdauer über einen langen Zeitraum, bevorzugterweise mindestens 8 Monate, mehr bevorzugt mindestens die gesamte Vegetationsperiode bzw. während der Fraßzeit des Schädlings und sogar darüber hinaus, führt zu einer hohen Rentabilität des erfindungsgemäßen Mittels. Die vorstehend genannten Vorteile kommen bereits nach einmaligem Aufbringen zur Geltung. Desweiteren ist das erfindungsgemäße Mittel überaus wetterbeständig, woraus sich ein weiterer Vorteil dieses Mittels herleiten läßt.

Harz ist im allgemeinen eine Sammelbezeichnung für eine Gruppe von festen oder halbfesten organischen Substanzen, die zwar unterschiedliche chemische Zusammensetzung haben, sich jedoch in einer Reihe physikalischer Eigenschaften, wie beispielsweise (großes) Schmelzintervall oder Löslichkeit, ähneln. Unter den Begriff Harz fallen gemäß der vorliegenden Erfindung aber auch flüssige Öle, die zu einem bestimmten Anteil enthalten sein können.
Das erfindungsgemäß verwendete Harz ist insbesondere ein natürliches Harz, welches also aus Ausscheidungen von Pflanzen, meist Bäumen, die entweder spontan oder nach künstlicher Verwundung ausfließen, erhalten werden kann.
Bei dem erfindungsgemäß verwendeten Harz handelt es sich insbesondere um ein rezentes, also ein frisch gewonnenes Harz, welches im Rohzustand verwendet wird. Es können aber auch Schritte zur Weiterverarbeitung des Harzes vorgesehen sein, so beispielsweise eine Temperaturbehandlung (Erhitzen), ein Filtrations- oder ein Extraktionsschritt. Auch verschiedenste aus dem Stand der Technik hierfür bekannte Reinigungsverfahren können erfindungsgemäß zum Einsatz kommen.
Insbesondere wird gemäß der vorliegenden Erfindung ein Weichharz, also ein Balsam, besonders bevorzugt ein Rohbalsam, verwendet. Beispielsweise handelt es sich bei dem Rohbalsam um einen Kiefernrohbalsam, z.B. ein aus Pinus Nigra Austriaca gewonnener.

Neben einem natürlichen Harz kann erfindungsgemäß aber auch ein synthetisches Gemisch bestehend aus unterschiedlichen Harzbestandteilen zum Einsatz kommen. Derartige Harzbestandteile können, wie bei Harzen stammend von natürlichen Quellen auch, insbesondere verschiedene etherische Öle, Terpene, Lipoide bzw. diverser "Fette" sein.

Gemäß der vorliegenden Erfindung können auch Mischungen aus einem natürlichen Harz und einem bestimmten synthetisch hergestellten oder isolierten Harzbestandteil eingesetzt werden. Durch Beimengen bzw. Zumischen derartiger Stoffe zu einem natürlicherweise vorkommendem Harz kann insbesondere die Wirksamkeit des Mittels gegen den jeweiligen Schädling noch erhöht werden.

Das gemäß der Erfindung eingesetzte Harz kann, wie in der Harzanalytik üblich, durch verschiedene Kenngrößen wie Jodzahl, Verseifungszahl, Säurezahl, Hydroxylzahl, Gehalt an wasserdampfdestillierbaren etherischen Ölen oder durch die Löslichkeit charakterisiert werden.
Der Gehalt an etherischen Ölen, insbesondere an wasserdampfdestillierbaren etherischen Ölen, liegt gemäß der vorliegenden Erfindung bevorzugterweise zwischen 20 und 70%, mehr bevorzugt zwischen 25 und 50%, am meisten bevorzugt zwischen 30 und 40%.

Die Jodzahl ist ein Maß für den Gehalt an ungesättigten Fettsäuren. Sie ist die Anzahl an Halogen (ausgedrückt als Iod), die von 100 g Fett addiert werden können.
Auch die Farbe, ausgedrückt durch die Jodfarbzahl bzw. in Gardner, kann als Kenngröße des Harzes verwendet werden. So liegt die Jodfarbzahl bei dem erfindungsgemäß eingesetzten Harz um 5, was etwa 4 Gardner entspricht.

Die Verseifungszahl gibt die Anzahl mg KOH an, die zur Verseifung von 1g Fett benötigt werden. Die gemäß der Erfindung bevorzugterweise eingesetzten Harze weisen eine Verseifungszahl zwischen 80 und 150 mg KOH/g Harz auf, am meisten bevorzugt zwischen 120 und 140 mg KOH/g. Der unverseifbare Anteil liegt in dem erfindungsgemäß verwendeten Harz beispielsweise in einem Bereich zwischen 5 und 50%, bevorzugterweise zwischen 10 und 20%.
Die Säurezahl mißt die in natürlichen Fetten stets in geringen Mengen vorhandenen freien Fettsäuren. Sie ist bei nicht mehr ganz frischen Fetten größer, da beim Lagern durch Oxidation freie Säuren entstehen. Die Säurezahl ist definiert als die Anzahl mg KOH, welche zur Neutralisation der freien Säure in lg Fett notwendig sind. Die Säurezahl der erfindungsgemäß verwendeten Harze liegt vorzugsweise in einem Bereich zwischen 90 und 130 mg KOH/g, mehr bevorzugt zwischen 100 und 120 mg KOH/g und am meisten bevorzugt um 110 mg KOH/g.
Die Hydroxylzahl des Harzes liegt bevorzugterweise zwischen 40 und 60 mg KOH/g, am meisten bevorzugt zwischen 50 und 55 mg KOH/g.
Ein weiteres Kennzeichen für das Harz ist der Erweichungspunkt bzw. das Erweichungsintervall. Das gemäß der vorliegenden Erfindung verwendete Harz bildet beispielsweise bei 25°C eine inhomogene Paste und bei einer Temperatur um 100°C eine klare Schmelze.
Der Glührückstand des Harzes liegt vorzugsweise unter 0,1%.

Als ein weiteres Kennzeichen für das Harz kann dessen Löslichkeit in verschiedenen Lösungsmitteln herangezogen werden. Das erfindungsgemäß verwendete Harz ist beispielsweise in Toluol u.ä. Lösungsmitteln klar löslich. Auch die Unlöslichkeit in einem bestimmten Lösungsmittel kann für die Charakterisierung des verwendeten Harzes herangezogen werden. So liegt die Unlöslichkeit in Testbenzin beispielsweise unter 0,1%.
Der Harzanteil in dem erfindungsgemäßen Mittel liegt gemäß einer bevorzugten Ausführungsform zwischen 9 und 65 Gew.%, vorzugsweise zwischen 5 und 50 Gew.%, am meisten bevorzugt zwischen 10 und 25 Gew.%.

In dem erfindungsgemäßen Mittel ist auch ein Lösungsmittel enthalten, insbesondere ist dies ein Lösungsmittel für das Harz.
Als Lösungsmittel wird vorzugsweise eine organische Substanz ausgewählt aus der Gruppe Alkohol, Ether, Ester, Aromat und halogenierter Kohlenwasserstoff oder Wasser verwendet. Auch verschiedenste Mischungen dieser Lösungsmittel sind möglich. Als Aromat kommt z.B. Benzol, Toluol oder eine phenolische Verbindung zum Einsatz.
In einer bevorzugten Ausführungsform wird eine Mischung aus Wasser und Alkohol, insbesondere Ethanol, verwendet. Beispielsweise wird als Lösungsmittel 96%-iges Ethanol verwendet.
Die zugesetzte Menge an Lösungsmittel richtet sich insbesondere nach der Zusammensetzung des verwendeten Harzes, aber auch nach Art und Menge an verwendetem Trägermaterial. Enthält das eingesetzte Harz beispielsweise mehr flüssige Anteile, so wird im allgemeinen eine geringere Menge an Lösungsmittel ausreichend sein. Ist das Harz hingegen überwiegend aus festen Bestandteilen zusammengesetzt, so wird die Menge an Lösungsmittel entsprechend höher sein.
Der Anteil an Lösungsmittel in dem erfindungsgemäßen Mittel liegt vorzugsweise in einem Bereich zwischen 1 und 30 Gew.%, mehr bevorzugt in einem Bereich zwischen 5 und 30 Gew.%, am meisten bevorzugt zwischen 10 und 20 Gew.%.
Das Lösungsmittel wird insbesondere in einer solchen Menge zugesetzt, daß das erfindungsgemäße Mittel eine der jeweiligen Anwendungs- bzw. Verwendungsart entsprechende Viskosität aufweist.

Das erfindungsgemäße Mittel enthält als einen weiteren Bestandteil bzw. als eine weitere Komponente ein Trägermaterial. Insbesondere ist dies ein festes Trägermaterial, am meisten bevorzugt ein anorganisches Material. Ein derartiger, als Trägermaterial bezeichneter Stoff kann als solches inaktiv sein, wie dies beispielsweise bei den als Füllstoff bekannten Stoffen der Fall ist, es kann aber auch eine aktive Komponente bilden, beispielsweise wirkt es verdickend oder übt eine anderweitige Funktion aus. Das Trägermaterial kann prinzipiell in allen Aggregatzuständen vorliegen, also in festem, flüssigem oder gasförmigem Zustand, oder es ist eine Mischung aus Stoffen in verschiedenen Aggregatzuständen.

In einer besonders bevorzugten Ausführungsform handelt es sich bei dem Trägermaterial um ein Silizium-hältiges, insbesondere Kieselsäure-hältiges Material. Als solche sind insbesondere Gesteinsmehle, beispielsweise Urgesteinsmehle wie Diabas, aber auch Biolith geeignet. Auch gängige Tonmaterialien oder diverse organische Rohstoffe können als Trägermaterialien eingesetzt werden.
Ist das Trägermaterial ein im wesentlichen anorganisches Trägermaterial so ist bevorzugterweise neben Kieselsäure eine Substanz ausgewählt aus der Gruppe Titan, Aluminium, Eisen, Mangan, Magnesium, Kalzium, Natrium, Kalium und Kohlenstoff oder eine Verbindung des entsprechenden Stoffes, wie beispielsweise eine Oxidverbindung enthalten.

Weiters können auch Spurenelemente wie beispielsweise Barium, Kobalt, Kupfer, Nickel, Rubidium, Strontium, Zirkonium, Zink, Molybdän, Schwefel bzw. Jod enthalten sein.

Das Trägermaterial zeichnet sich, wenn es in überwiegend fester Form vorliegt, insbesondere durch seine Korngröße bzw. Mahlfeinheit aus, welche vorzugsweise in einem Bereich zwischen 0,05 mm und 1 cm liegt und am meisten bevorzugt um 0,1 mm liegt.
Dem Trägermaterial können auch weitere Stoffe zugesetzt werden, insbesondere solche Stoffe, die zur Verbesserung der Hafteigenschaften des Mittels beitragen.
Bevorzugterweise ist das feste Trägermaterial in einem Anteil zwischen 10 und 90 Gew.%, vorzugsweise zwischen 50 und 80 Gew.%, am meisten bevorzugt zwischen 60 und 70 Gew.% in dem erfindungsgemäßen Mittel enthalten.
Gemäß der vorliegenden Erfindung werden folgende Mischungen bevorzugt (Angabe in Gew.%):

| Harz : | Lösungsmittel : | Trägermaterial |
|---|---|---|
| 10 - 25 | 5 - 30 | 60 - 75 |
| 15 - 20 | 10 - 20 | 60 - 70 |

Das erfindungsgemäße Mittel kann als ein Gemisch der entsprechenden Komponenten, also des Harzes, des Lösungsmittels und des Trägermaterials vorliegen, die Komponenten können aber auch aneinander beispielsweise kovalent oder durch Adsorption gebunden vorliegen.
In dem Mittel können weitere Zuschlagstoffe enthalten sein, beispielsweise solche, die die Effizienz des Mittels steigern oder Eigenschaften wie Haftfähigkeit oder Witterungsbeständigkeit verbessern. Beispielsweise können Pyrethroide oder andere bekannte Insektizide, vorzugsweise in geringen Mengen, enthalten sein. Aber auch verschiedenste Geruchsstoffe, beispielsweise Niemöl, können dem erfindungsgemäßen Mittel zugesetzt werden.

Das erfindungsgemäße Mittel liegt vorzugsweise in einer für das Bestreichen, Bespritzen oder Besprühen der Pflanze geeigneten Form vor. Insbesondere besitzt das Mittel eine gute Haftung an der Pflanze, welche unabhängig von der Witterung sehr gut ist. So haftet das Mittel beispielsweise auch bei Regen ausreichend gut. Das erfindungsgemäße Mittel liegt beispielsweise als Lösung, als Suspension, als Kolloid oder als Aerosol vor.

Das erfindungsgemäße Mittel ist v.a. für den Einsatz in Aufforstungsgebieten, insbesondere nach einem Kahlschlag des entsprechenden Gebietes, geeignet. Der Stamm der jungen Pflanzen kann als ganzes mit dem Mittel versehen, beispielsweise eingestrichen werden, wodurch die Pflanze vor Schädlingen geschützt werden kann.
Das gemäß der vorliegenden Erfindung zur Verfügung gestellte Mittel enthaltend ein Harz, ein Lösungsmittel und ein Trägermaterial kann also insbesondere zum Schutz von Pflanzen gegen Schädlinge, insbesondere Rüsselkäfer, verwendet werden.

Das folgende Beispiel soll die vorliegende Erfindung veranschaulichen, ohne diese jedoch darauf zu beschränken.

### 1. Herstellung des Mittels:

Für die im folgenden beschriebenen Versuche wurde ein Mittel verwendet, welches durch Lösen von 17,5g Kiefernrohbalsam in 15,5g Ethanol (96%-ig) unter Beimischen von 67,0g Urgesteinsmehl aus Diabas hergestellt worden ist. Das derart hergestellte Mittel wurde als eine streichfähige, homogene Paste verwendet.

### 2. Aufbringen des Mittels auf die Pflanze und Klassifizierung der Pflanzen:

Das gemäß Punkt 1. hergestellte Mittel wurde mit einem Pinsel auf Fichtenjungpflanzen aufgebracht.
Die Bewertung der Pflanzen wurde wie folgt vorgenommen:
- 0: kein Rüsselkäfer Befall
- 1: leichter Befall, gekennzeichnet durch geringen, verteilten Plätzefraß
- 2: mittlerer Befall, gekennzeichnet durch dichter verteilten Plätzefraß
- s: schwerer Befall, gekennzeichnet durch so dichten Plätzefraß, daß der Saftstrom der Pflanze bereits unterbrochen ist
- t: Tod der Pflanze durch Rüsselkäferfraß, erkennbar an einer braunen bzw. abgestorbenen Benadelung
- t (?): Pflanzen bei denen die Ursache des Absterbens unbekannt bzw. nicht durch Rüsselkäfer verursacht wurde

### 3. Ergebnisse:

Die Aufnahme der Fraßschäden erfolgte 4-mal in etwa monatlichen Zeitabständen.
Als entscheidend für den Bekämpfungserfolg ist der Prozentsatz der überlebenden Pflanzen am Ende der Vegetationsperiode anzusehen.
Im Vergleich zur Nullvariante (unbehandelte Vergleichspflanzen) ergab sich nach Aufbringung des erfindungsgemäßen Mittels eine signifikante Verbesserung hinsichtlich des Bekämpfungserfolgs des Großen Braunen Rüsselkäfers (Hylobius abietis).

## Patentansprüche

1. Mittel zum Schutz von Pflanzen gegen Schädlinge, insbesondere Rüsselkäfer, dadurch gekennzeichnet, daß das Mittel ein Harz, ein Lösungsmittel und ein Trägermaterial enthält.

2. Mittel nach Anspruch 1, dadurch gekennzeichnet, daß das Harz ein Rohbalsam ist, insbesondere ein von Koniferen stammender Rohbalsam.

3. Mittel nach Anspruch 1 oder 2, dadurch gekennzeichnet, daß das Lösungsmittel eine organische Substanz ausgewählt aus der Gruppe Alkohol, Ether, Ester, Aromat und halogenierter Kohlenwasserstoff ist, Wasser oder eine Mischung davon.

4. Mittel nach einem der Ansprüche 1 bis 3, dadurch gekennzeichnet, daß das Lösungsmittel Ethanol, vorzugsweise 96%-iges Ethanol, ist.

5. Mittel nach einem der Ansprüche 1 bis 4, dadurch gekennzeichnet, daß das Trägermaterial ein festes Trägermaterial ist, insbesondere ein anorganisches Trägermaterial, besonders bevorzugt ein Silizium-hältiges Trägermaterial.

6. Mittel nach einem der Ansprüche 1 bis 5, dadurch gekennzeichnet, daß das Trägermaterial ein Gesteinsmehl ist, vorzugsweise Diabas.

7. Mittel nach einem der Ansprüche 1 bis 6, dadurch gekennzeichnet, daß das Trägermaterial in einem Anteil zwischen 10 und 90 Gew.%, vorzugsweise zwischen 50 und 80 Gew.%, am meisten bevorzugt zwischen 60 und 70 Gew.% enthalten ist.

8. Mittel nach einem der Ansprüche 1 bis 7, dadurch gekennzeichnet, daß der Anteil an Harz zwischen 9 und 65 Gew.% beträgt, vorzugsweise zwischen 5 und 50, am meisten bevorzugt zwischen 10 und 25 Gew.%.

9. Mittel nach einem der Ansprüche 1 bis 8, dadurch gekennzeichnet, daß das Mittel in einer für das Bestreichen, Bespritzen oder Besprühen der Pflanze geeigneten Form vorliegt.

10. Mittel nach einem der Ansprüche 1 bis 9, dadurch gekennzeichnet, daß das Mittel als Suspension, Kolloid oder als Lösung vorliegt.
